# EUROPÄISCHE PATENTANMELDUNG

(11) **EP 3 900 797 A1**
(43) Veröffentlichungstag der Anmeldung: **27.10.2021**
(21) Anmeldenummer: 21161775.8
(22) Anmeldetag: 10.03.2021
(51) Int. Cl.: A62B 23/02, A41D 13/11

(54) **ATEMSCHUTZMASKE**

(30) Priorität: 24.04.2020 DE 202020102306 U
(71) Anmelder: Wolf PVG GmbH & Co. KG, 32427 Minden (DE)
(72) Erfinder: HOPPE, Martin, 32425 Minden (DE)
(74) Vertreter: Dantz, Jan Henning

(57) **Zusammenfassung**

Die Erfindung betrifft eine Atemschutzmaske (1) mit einem Maskenkörper (2) aus einem textilen Material, der bei einer Person über Nase und Mund anlegbar und an der Person über Haltemittel (4) fixierbar ist, wobei an einer dem Mund und Nase zugewandten Innenseite des Maskenkörpers (2) eine flächige Einlage (3) als Feinfilter lösbar befestigt ist.

## Beschreibung

Die vorliegende Erfindung betrifft eine Atemschutzmaske mit einem Maskenkörper aus einem textilen Material, der bei einer Person über Nase und Mund anlegbar und an der Person über Haltemittel fixierbar ist.

Die WO 2017/083289 offenbart eine Atemschutzmaske mit mehreren Abschnitten aus Filtermaterial, die an die Gesichtsform eines Benutzers angepasst ist. Solche Atemschutzmasken für den medizinischen Bereich sind wirksam, allerdings für den Verbraucher nicht immer verfügbar und zudem aufwändig und teuer in der Herstellung.

Für die Fahrt mit öffentlichen Verkehrsmitteln werden häufig Maskenkörper aus einem textilen Material eingesetzt, die einfach genäht und gewaschen werden können. Solche Maskenkörper bieten aber einen unzureichenden Filtrationsschutz, da nur große Partikel gefiltert werden können. Solche textilen Maskenkörper sind aber kostengünstig herstellbar.

Es ist daher Aufgabe der vorliegenden Erfindung, eine Atemschutzmaske bereitzustellen, die einfach aufgebaut ist und einen verbesserten Filtrationsschutz besitzt.

Diese Aufgabe wird mit einer Atemschutzmaske mit den Merkmalen des Anspruches 1 gelöst.

Die erfindungsgemäße Atemschutzmaske besitzt einen Maskenkörper aus einem textilen Material, der an seiner Innenseite eine flächige Einlage als Feinfilter aufweist, wobei die Einlage lösbar an dem Maskenkörper befestigt ist. Dadurch kann der Maskenkörper aus einem textilen waschbaren Material hergestellt sein, der wie einfache Atemschutzmasken gewaschen werden kann. Zur Verbesserung der Filtrationsleistung ist die Einlage vorgesehen, die als Feinfilter wirkt und somit einen verbesserten Infektionsschutz bewirkt. Zudem besitzt die Atemschutzmaske durch den flexiblen Maskenkörper aus textilem Material einen hohen Tragekomfort.

Vorzugsweise besitzt die Einlage eine Größe von mindestens 50 %, vorzugsweise 70 % bis 98 % der Größe des Maskenkörpers. Die Einlage kann dann in dem Maskenkörper aufgenommen sein und steht nicht über diesen hervor, wobei ein solches Hervorstehen optional ebenfalls möglich ist. In jedem Fall besitzt die Einlage eine Größe, die ermöglicht, dass Mund und Nase überdeckt werden, so dass beim Atmen ein entsprechender Schutz durch Filtration von feinen Partikeln vorhanden ist.

Die Einlage umfasst vorzugsweise eine Lage aus einem Vliesstoff, insbesondere einem Meltblown. Ein solches Meltblown besitzt eine besonders hohe Filtereffizienz für feine Partikel. Optional kann die Einlage mit dem Meltblown eine bakterielle Filterleistung nach DIN EN 14683:2019-10 von mehr als 95 %, insbesondere mehr als 98 %, besitzen. Dabei erfolgt das Testen der Atemschutzmaske mit der Einlage gemäß der Tabelle 5.2.7, so dass über die Atemschutzmaske infektiöse Keime, Bakterien, Viren oder Pilzsporen gefiltert werden können.

In einer weiteren Ausgestaltung umfasst die Einlage mehrere Lagen. Dabei kann die Lage Meltblown zwischen zwei Stützlagen angeordnet sein, die beispielsweise aus einem Spunbond, Scrim, Netz, Gewebe oder einem anderen Material hergestellt werden können. Die Luftdurchlässigkeit der Einlage beträgt bei einem Differenzdruck von 2 mbar mehr als 200 l/(m²*s), insbesondere mehr als 300 l/(m²*s), um das Atmen nicht zu stark zu erschweren. Der Maskenkörper kann eine deutlich höhere Luftdurchlässigkeit besitzen, beispielsweise über 400 l/(m²*s).

Die Einlage ist vorzugsweise elektrostatisch aufgeladen. Hierfür kann die Einlage über eine Coronaentladung oder durch Hydrocharging aufgeladen werden. Die elektrostatische Aufladung ist bevorzugt so groß, dass die Einlage durch die elektrostatische Aufladung an dem Maskenkörper lösbar anhaftet und die Einlage beispielsweise bei Anordnung an einer Unterseite des Maskenkörpers nicht herabfällt. Dadurch erübrigen sich aufwändige Maßnahmen zur Fixierung der Einlage an dem Maskenkörper. Optional können zwischen Maskenkörper und Einlage auch Haftmittel vorgesehen sein, beispielsweise eine Klebefläche oder eine Klettfläche, wahlweise an der Einlage und/oder dem Maskenkörper angebracht.

Die Einlage besitzt vorzugsweise ein Flächengewicht zwischen 10 g/m² bis 120 g/m², insbesondere 25 g/m² bis 80 g/m².

Die Einlage ist vorzugsweise als rechteckiger Zuschnitt ausgebildet, da diese Passform sich leicht in den textilen Maskenkörper einbringen lässt. Die Einlage kann dabei optional als fertiger Zuschnitt in Blattform bevorratet werden oder auf eine Rolle aufgewickelt werden, wobei die Einlagen mit mindestens einer benachbarten Einlage über Sollbruchstellen verbunden sind. Dadurch reduziert sich das Transportvolumen für eine Vielzahl von Einlagen, die nach Gebrauch entsorgt werden können, während der Maskenkörper wiederverwendet wird.

Die Erfindung wird nachfolgend anhand eines Ausführungsbeispiels mit Bezug auf die beigefügte Zeichnung näher erläutert. Es zeigt:

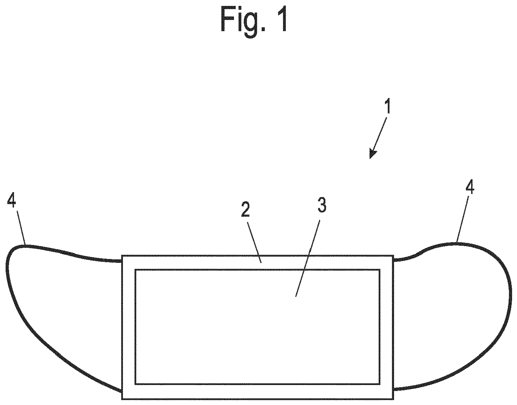

- Figur 1: eine Ansicht einer erfindungsgemäßen Atemschutzmaske.

Eine Atemschutzmaske 1 umfasst einen Maskenkörper 2 aus einem textilen Material, der über Haltemittel 4 an einer Person befestigbar ist. Der Maskenkörper 2 ist als rechteckiger Zuschnitt ausgebildet, kann aber auch eine andere Form haben. Die Haltemittel 4 sind durch Schlaufen gebildet, die um ein Ohr einer Person anlegbar sind. Optional können die Haltemittel 4 auch um den Nacken einer Person herumgeführt werden und beispielsweise aus einem elastischen Band hergestellt sein.

Der Maskenkörper 2 aus textilem Material kann aus einem Baumwollstoff, Wolle, Polymerstoff oder einem Stoff aus Mikrofasern hergestellt sein und ist wiederverwendbar. Durch Waschen kann der textile Maskenkörper gereinigt werden. Um die Filtrationsleistung der Atemschutzmaske 1 zu erhöhen, ist an dem Maskenkörper 2 eine flächige Einlage 3 als Feinfilter lösbar fixiert, die durch einen Waschvorgang beschädigt würde.

Die Einlage 3 umfasst eine Schicht Meltblown, die vorzugsweise zwischen zwei Stützlagen angeordnet ist. Eine solche Lage Meltblown besitzt meist eine geringe mechanische Festigkeit, so dass vorzugsweise auf beiden Seiten der Lage Meltblown eine Stützschicht vorgesehen ist, beispielsweise aus einem Spinnvlies, Scrim, einem Netting, einer luftdurchlässigen perforierten Kunststofffolie oder einem Gewebe. Die Einlage 3 ist dabei als rechteckiger Zuschnitt ausgebildet und nimmt eine Fläche ein, die mindestens 50 %, vorzugsweise zwischen 70 % bis 98 % der Fläche des Maskenkörpers 2 entspricht, so dass über die Einlage 3 ebenfalls Mund und Nase abgedeckt werden.

Die Einlage 3 haftet an dem Maskenkörper 2 vorzugsweise über eine elektrostatische Aufladung der Einlage 3, beispielsweise durch Corona-Entladung oder Hydrocharging. Durch die Aufladung lässt sich die Einlage 3 ohne weitere Haftmittel an dem textilen Maskenkörper 2 lösbar fixieren. Optional können an dem Maskenkörper 2 oder der Einlage 3 auch andere Haftmittel eingesetzt werden, beispielsweise Klebeflächen oder Klettflächen. Zudem können auch mechanische Befestigungsmittel eingesetzt werden, wie Klammern oder Zugbänder.

Die Einlage kann beispielsweise Abmessungen in Längsrichtung zwischen 15 cm bis 22 cm und in Höhenrichtung zwischen 11 cm bis 17 cm aufweisen. Eine solche Einlage kann auch an einem anderen Maskenkörper 2 eingesetzt werden, beispielsweise einem Maskenkörper, der durch einen Schal oder ein anderes Bekleidungsstück hergestellt wird.

### Bezugszeichenliste

- 1: Atemschutzmaske
- 2: Maskenkörper
- 3: Einlage
- 4: Haltemittel

## Patentansprüche

1. Atemschutzmaske (1) mit einem Maskenkörper (2) aus einem textilen Material, der bei einer Person über Nase und Mund anlegbar und an der Person über Haltemittel (4) fixierbar ist, **dadurch gekennzeichnet, dass** an einer dem Mund und Nase zugewandten Innenseite des Maskenkörpers (2) eine flächige Einlage (3) als Feinfilter lösbar befestigt ist.

2. Atemschutzmaske nach Anspruch 1, **dadurch gekennzeichnet, dass** die Einlage (3) eine Größe von mindestens 50 %, vorzugsweise zwischen 70 % bis 98 % der Größe des Maskenkörpers besitzt.

3. Atemschutzmaske nach Anspruch 1 oder 2, **dadurch gekennzeichnet, dass** die Einlage (3) eine Lage Meltblown umfasst.

4. Atemschutzmaske nach einem der vorhergehenden Ansprüche, **dadurch gekennzeichnet, dass** die Einlage (3) mehrere Lagen umfasst.

5. Atemschutzmaske nach Anspruch 4, **dadurch gekennzeichnet, dass** die Lage Meltblown zwischen zwei Stützlagen angeordnet ist.

6. Atemschutzmaske nach einem der vorhergehenden Ansprüche, **dadurch gekennzeichnet, dass** die Einlage (3) elektrostatisch aufgeladen ist.

7. Atemschutzmaske nach Anspruch 6, **dadurch gekennzeichnet, dass** die Einlage (3) durch die elektrostatische Aufladung an dem textilen Maskenkörper (2) lösbar anhaftet.

8. Atemschutzmaske nach einem der vorhergehenden Ansprüche, **dadurch gekennzeichnet, dass** das Flächengewicht der Einlage zwischen 10 g/m² bis 120 g/m² beträgt.

9. Atemschutzmaske nach einem der vorhergehenden Ansprüche, **dadurch gekennzeichnet, dass** zwischen Einlage (3) und Maskenkörper (2) mindestens ein Haftmittel vorgesehen ist.

10. Atemschutzmaske nach Anspruch 9, **dadurch gekennzeichnet, dass** das Haftmittel eine Klebefläche oder Klettfläche umfasst.

11. Atemschutzmaske nach einem der vorhergehenden Ansprüche, **dadurch gekennzeichnet, dass** die Einlage (3) als rechteckiger Zuschnitt ausgebildet ist.
